# EUROPÄISCHE PATENTANMELDUNG

(11) **EP 0 686 918 A1**
(43) Veröffentlichungstag der Anmeldung: **13.12.1995**
(21) Anmeldenummer: 94108391.7
(22) Anmeldetag: 31.05.1994
(51) Int. Cl.: G06F 12/02, G06F 11/00

(54) **Verfahren zur Verwaltung von Objekten in Datenverarbeitungsanlagen, insbesondere zur Speicherverwaltung**

(71) Anmelder: Siemens Nixdorf Informationssysteme AG, D-33106 Paderborn (DE)
(72) Erfinder: Pichler, Christian, Dipl.-Ing., D-80636 München (DE)
(74) Vertreter: Fuchs, Franz-Josef, Dr.-Ing.

(57) **Zusammenfassung**

Definierte und frei verfügbare Objekte (OB:i) werden durch Kreuzreferenz gesichert, indem in einer Referenztabelle (R-TAB) für nur solche Objekte ein Eintrag mit einer Referenz (OB:i) auf das Objekt angelegt und das Objekt wiederum mit einer Referenz (TAB:j) auf diesen Eintrag versehen wird. Im Rahmen der Speicherverwaltung bilden frei verfügbare Speicherblöcke (BL:x) die Objekte, wobei jeweils das erste und letzte Wort des Speicherblockes (BL:x) mit der Referenz (TAB:j) auf denselben Eintrag der Referenztabelle (R-TAB) belegt wird und die Größe (SIZE...) des Speicherblockes vorzugsweise zusammen mit der Referenz (BL:x) auf den Speicherblock in der Referenztabelle (R-TAB) abgespeichert wird. Dadurch Verringerung des Speicheraufwandes für die Referenztabelle und bessere Nutzung des Speicherraumes.

## Beschreibung

Datenverarbeitungsanlagen arbeiten in der Weise, daß vorhandene gemeinsame Resourcen oder Objekte vorübergehend den einzelnen Anwendungen zur Verfügung gestellt werden. Die Objekte können dabei von verschiedenster Art sein, z.B. Programmodule, Terminals, Verbindungsleitungen im Netz, Speicherraum usw. In allen diesen Fallen muß die Systemverwaltung unterscheiden können, ob Objekte verfügbar oder einer Anwendung zugewiesen sind. In der Regel werden dazu für die einzelnen Objektklassen Tabellen geführt, aus denen durch entsprechende Einträge für die einzelnen Objekte ersichtlich ist, ob sie verfügbar sind oder nicht.

Die Erfindung hat ein neues Verfahren zur Verwaltung der Objekte zum Gegenstand, das bei größerer Sicherheit in einfacher Weise durchführbar ist und im Mittel kleinere Tabellen erfordert.

Dieses Verfahren ergibt sich aus den kennzeichnenden Merkmalen des Anspruches 1. Danach wird nicht von vornherein für jedes Objekt einer Objektklasse ein Eintrag in der zugehörigen Tabelle vorgesehen, sondern es wird jeweils nur für die definierten und frei verfügbaren Objekte ein Eintrag angelegt, wobei die Kreuzreferenz vom Objekt auf einen Eintrag und von diesem Eintrag auf dasselbe Objekt eine gesichertere Zuordnung gewährleistet. Da im Mittel immer eine Reihe von Objekten nicht verfügbar ist, kann außerdem der Umfang der Referenztabellen wesentlich verkleinert werden.

Ausgehend von einem vorgegebenen Umfang der Referenztabelle ist es zweckmäßig, daß jedes Datum ohne gültige Referenz auf ein Objekt durch ein von gültigen Referenzen abweichendes Datum gebildet wird und daß die Referenztabelle gegebenenfalls erweiterbar ist.

Zweckmäßiger ist es jedoch, wenn gemäß Anspruch 4 die nicht mit Referenzeinträgen belegten Speicherabschnitte der Referenztabelle für weitere, verfügbar werdende Objekte über Adressen gekettet sind, wobei ein Zeiger auf den Anfang dieser Kette verweist, da dann Änderungen der Referenztabelle ohne Suchvorgänge ausgeführt werden können.

Besondere Vorteile dieses Verfahrens ergeben sich aus der Anwendung auf die Speicherverwaltung, wobei die einzelnen Speicherblöcke die Objekte bilden. Da die den einzelnen Anwendungen vorübergehend zuzuordnenden Speicherblöcke des zu verwaltenden Speichers unterschiedlich groß sein können, kann der verfügbare Speicherraum sehr schnell zerstückelt werden. Anforderungen auf Zuweisung von zusammenhängendem Speicherraum als Speicherblock können dann häufig nicht mehr erfüllt werden, obwohl insgesamt noch ausreichend Speicherraum verfügbar ist.

Weiterbildungen dieses Verfahrens ergeben sich aus den Merkmalen der Ansprüche 5 bis 8.

Danach werden in Anlehnung an ein bekanntes Verfahren, wie es aus D.E. Knuth: "The Art of Computer Programming", Addison-Wesley Publishing Comp., 2. Auflage 1975, Vol. 1, S. 435 - 451 bekannt ist, bei jedem verfügbaren Speicherblock das erste und letzte Wort mit einem Eintrag versehen, der gemäß dem neuen Verfahren aus der Referenz auf dasselbe Datum in der Referenztabelle besteht. Desweiteren kann die Größe des jeweiligen Speicherblockes in bekannter Weise im Speicherblock selbst abgespeichert sein. Zweckmäßiger ist es jedoch, die Größe jeweils als Bestandteil des Datums in der Referenztabelle abzuspeichern. Die Speicherverwaltung wird dadurch weniger störanfällig, da die Gefahr verringert wird, daß beim Überschreiben von Blockgrenzen für die Speicherverwaltung benötigte Informationen zerstört werden. Außerdem verringert sich der Speicherbedarf für die Speicherverwaltungsinformationen erheblich, da nicht mehr für jeden einer Anwendung zugeordneten Speicherblock zwei zusätzliche Worte aufzuwenden sind, was um so stärker ins Gewicht fällt, je kleiner die einzelnen Speicherblöcke sind.

Einzelheiten der Erfindung seien nachfolgend an Hand von in der Zeichnung dargestellten Ausführungsbeispielen näher erläutert. Im einzelnen zeigen
- Figur 1: eine Prinzipdarstellung zur Erläuterung der Beziehungen zwischen Objekten und der Referenztabelle,
- Figur 2: ein Flußdiagramm für den Steuerungsablauf bei einer Anforderung für ein verfügbares Objekt,
- Figur 3: ein Flußdiagramm für den Steuerungsablauf beim Wiederverfügbarwerden eines Objektes,
- Figur 4: eine Prinzipdarstellung zur Erläuterung der Beziehungen zwischen Speicherblöcken und der Referenztabelle im Falle der Speicherverwaltung und
- Figur 5: eine Darstellung aufeinanderfolgender Speicherbelegungsphasen in Anlehnung an die Darstellung von Figur 4 mit ihren Auswirkungen auf die Einträge in der Referenztabelle.

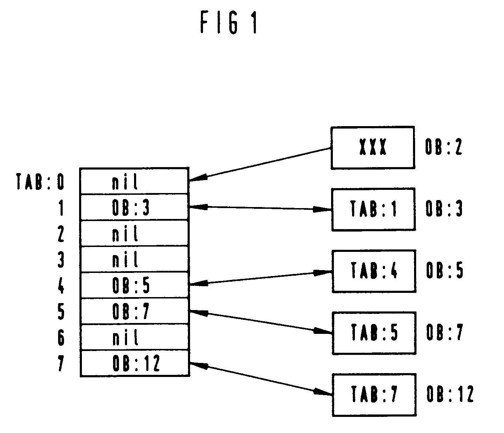

Figur 1 zeigt im linken Teil eine Referenztabelle R-TAB gemäß der Erfindung und im rechten Teile eine Reihe von Objekten OB:i, von denen das Objekt OB:2 nicht definiert und damit nicht verfügbar ist.

Die Referenztabelle R-TAB enthält z.B. acht Eintragsfelder TAB:0 bis TAB:7 für je ein Datum, von denen nur die Eintragsfelder TAB:1, TAB:4 und TAB:5 sowie TAB:7 eine gültige Referenz als Datum auf eines der vier verfügbaren Objekte OB:3, OB:5, OB:7 und OB:12 enthalten, während in die anderen Eintragsfelder das Datum "nil" eingetragen ist, was eine ungültige Referenz auf die Objekte kennzeichnet. Umgekehrt sind den verfügbaren Objekten Referenzen zugeordnet, die auf jeweils eines der Eintragsfelder TAB:j der Referenztabelle verweisen. Frei verfügbare Objekte sind also durch eine gegenseitige Referenzbeziehung gesichert, indem das Datum eines Tabelleneintrages ein Objekt und umgekehrt dasselbe Objekt denselben Tabelleneintrag referenziert.

Nicht verfügbare Objekte zeichnen sich daher dadurch aus,
· daß ihre Referenz entweder auf einen ungültigen Tabelleneintrag zeigt, der mit dem Datum "nil" oder einer Kettungsadresse belegt ist,
· oder daß ihre Referenz nicht auf einen Tabelleneintrag zeigt,
· oder daß ihre Referenz zwar auf einen gültigen Tabelleneintrag zeigt, aber dieser referenziert nicht dasselbe Objekt.

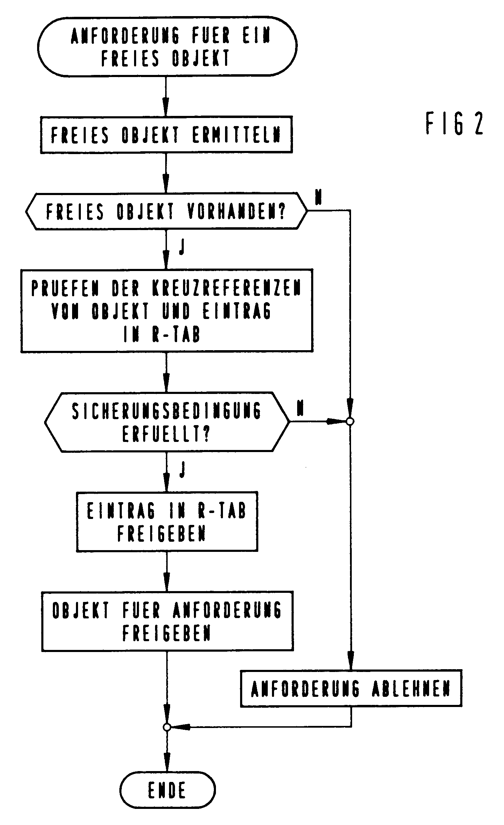

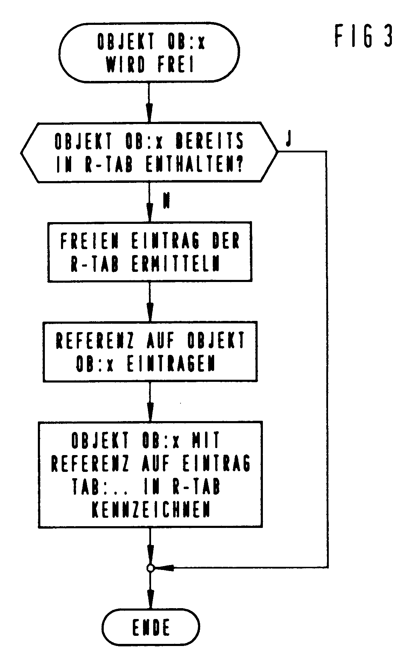

Die sich aus der Kreuzreferenz für die Objekte ergebenden Steuerungsabläufe sind aus den Flußdiagrammen von Figur 2 und Figur 3 ersichtlich. Liegt gemäß Figur 2 eine Anforderung für ein verfügbares Objekt vor, dann wird z.B. zunächst anhand der Referenztabelle R-TAB geprüft, ob ein Objekt verfügbar ist. Danach wird das durch den Eintrag referenzierte Objekt OB:y daraufhin überprüft, ob dessen Referenz auf den gefundenen Eintrag der Referenztabelle R-TAB zeigt. Ist dies der Fall, ist das Objekt voraussetzungsgemäß verfügbar und kann für die Anforderung freigegeben werden. Außerdem wird der Eintrag in der Referenztabelle ungültig und damit frei. Das für die Anforderung freigegebene Objekt ist damit in der Referenztabelle R-TAB gelöscht und für weitere Anforderungen nicht mehr verfügbar, bis es von der anfordernden Anwendung nicht mehr benötigt wird.

Wird das Objekt wieder verfügbar, wird gemäß Figur 3 in der Referenztabelle R-TAB ein freier Eintrag ermittelt und mit der Referenz auf das verfügbar gewordene Objekt OB:x belegt sowie dem Objekt die Referenz auf diesen Eintrag zugeteilt.

Sollte kein freier Eintrag in der Referenztabelle R-TAB gefunden werden, bestehen für die Steuerung zwei Möglichkeiten der Reaktion, die in Figur 3 nicht berücksichtigt sind:
1. Die Referenztabelle R-TAB ist nicht erweiterbar, dann müßte das erneut verfügbare Objekt in eine gesonderte Warteliste eingetragen werden, bis ein Eintrag in die Referenztabelle R-TAB möglich ist.
2. Die Referenztabelle R-TAB ist erweiterbar, dann müßte zunächst die Erweiterung der Referenztabelle R-TAB erfolgen.

Dabei dürfte die zuletzt genannte Steuerungsmöglichkeit vorzuziehen sein.

Auch der Fall, daß eine Anforderung nicht auf irgend ein verfügbares Objekt, sondern gezielt auf ein bestimmtes von den Objekten gerichtet ist, läßt sich in einfacher Weise steuern. In diesem Falle wird zunächst das gewünschte Objekt überprüft, ob es mit einer Referenz auf einen Eintrag in der Referenztabelle R-TAB versehen ist. Wird eine entsprechende Referenz gefunden, wird der damit referenzierte Eintrag der Referenztabelle R-TAB aufgesucht und überprüft, ob die dort angegebene Referenz auf dasselbe Objekt zeigt. Trifft auch dieses zu, dann ist das gewünschte Objekt verfügbar und kann der Anforderung zugeordnet werden, wobei wiederum die Referenz in der Referenztabelle R-TAB gelöscht wird.

Bei den bisher beschriebenen Steuerungsabläufen ist unterstellt, daß die Referenztabelle aus einer vorgegebenen Anzahl von Speicherabschnitten für eine entsprechende Anzahl von Einträgen besteht, unabhängig davon, ob die entsprechende Anzahl von Objekten verfügbar ist. Einträge können daher mit Referenzen für frei verfügbare Objekte belegt sein oder auch nicht, so daß Änderungen in der Referenztabelle in der Regel mit zeitraubenden Suchvorgängen verbunden sind.

Vorteilhafter ist es daher, die für die Bildung der Referenztabelle zur Verfügung stehende vorgegebene Anzahl von Speicherabschnitten aufzuteilen in solche, die mit einer Referenz auf ein verfügbares Objekt belegt sind und damit die eigentliche Referenztabelle bilden, und in solche, die mit keiner Referenz belegt sind, aber bei einem weiteren verfügbaren Objekt in die Referenztabelle einbezogen werden können. Die nicht belegten freien Speicherabschnitte werden dabei über Adressen in bekannter Weise gekettet und mit einem Zeiger gekoppelt, der auf den ersten Speicherabschnitt der Kette verweist, so daß bei Verfügbarwerden eines Objektes ein freier Speicherabschnitt ohne Suchvorgang ermittelt werden kann.

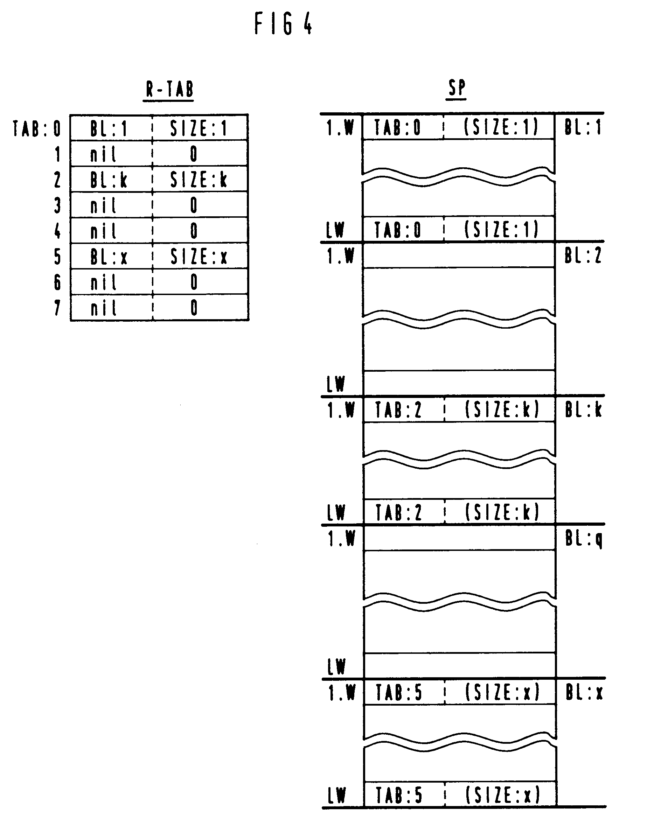

Figur 4 zeigt in Anlehnung an die Darstellung von Figur 1 die Beziehungen zwischen der Referenztabelle R-TAB und den einzelnen Speicherblöcken BL:i eines Speichers SP als Objekte im Rahmen der Speicherverwaltung. In diesem Falle sind bei den frei verfügbaren Speicherblöcken BL:1, BL:k und BL:x, die aus einzelnen Speicherabschnitten bestehen und wegen der für die einzelnen Anforderungen benötigten unterschiedlichen Anzahl von Speicherabschnitten im Laufe der Zeit verschieden groß sein können, jeweils das erste und das letzte Wort, 1.W und LW, mit einer Referenz auf denselben Eintrag in der Referenztabelle R-TAB belegt, also z.B. mit TAB:0 beim Speicherblock BL:1, während der entsprechende Eintrag der Referenztabelle R-TAB mit der Referenz BL:1 auf denselben Speicherblock zeigt. Analoges gilt für die übrigen verfügbaren Speicherblöcke BL:k und BL:x. Weiterhin benötigt die Speicherverwaltung die Angabe über die jeweilige Größe SIZE:.. des Blockes, die entweder wie beim bekannten Verfahren im Speicherblock selbst abgespeichert sein kann, was in Figur 4 durch die in Klammern gesetzten Großen angedeutet ist. Zweckmäßiger ist es jedoch, diese Größenangabe in der Referenztabelle R-TAB neben der jeweiligen Referenz als gemeinsames Datum abzuspeichern.

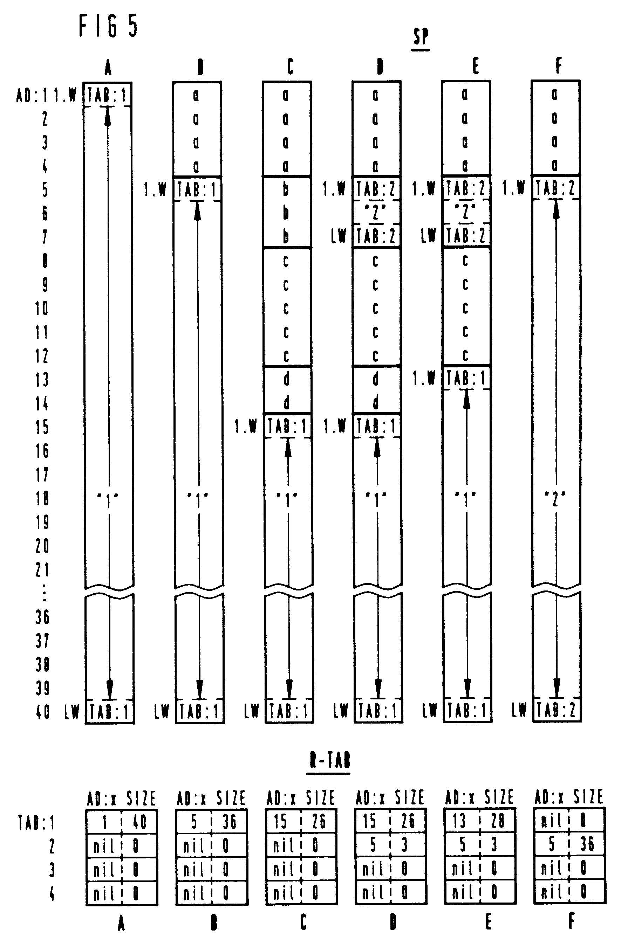

Figur 5 zeigt in Anlehnung an Figur 4 verschiedene Belegungsphasen A bis F des Speichers SP im oberen Teil und die sich damit ändernden Einträge der Referenztabelle R-TAB in unteren Teil.

In der Phase A sei davon ausgegangen, daß der gesamte Speicherraum des Speichers SP verfügbar ist und dieser 40 einzelne Speicherabschnitte umfaßt, denen der Reihe nach die Adressen AD:1 bis AD:40 zugeteilt sind. Damit ist zunächst ein einziger Speicherblock "1", beginnend mit der Adresse AD:1 und von der Größe SIZE:1 = 40 verfügbar, der mit einer Referenz TAB:1 im ersten und letzten Wort, 1.W und LW, auf den ersten Eintrag TAB:1 der Referenztabelle R-TAB zeigt.

In der Phase B wird der Speicherblock "a" mit der Größe SIZE=4 einer Anforderung zugeordnet. Der Beginn des verfügbaren Speicherblockes "1" wird dadurch auf die Adresse AD:5 verschoben; auch ändert sich seine Größe, was zu entsprechenden Änderungen des Eintrages TAB:1 in der Referenztabelle R-TAB führt.

In der Phase C benötigen drei weitere Anforderungen Speicherraum, wobei die Speicherblöcke "b", "c" und "d" gebildet und dem verfügbaren Speicherraum entzogen werden, so daß der verfügbare Speicherblock "1" auf die Größe SIZE:1=26 schrumpft und seine Anfangsadresse zu AD:15 wird.

In der Phase D wird der Speicherblock "b" wieder verfügbar. In der Referenztabelle R-TAB ist daher ein weiterer Eintrag für diesen Speicherblock anzulegen, da er an keinen verfügbaren Speicherblock angrenzt. Der erste mit "nil" belegte Eintrag in der Referenztabelle R-TAB ist TAB:2, in den die Anfangsadresse AD:5 und die Größe SIZE:2=3 des verfügbaren neuen Speicherblockes "2" eingetragen wird. Außerdem wird das erste und letzte Wort, 1.W und LW, des Speicherblockes "2" mit der Referenz TAB:2 auf diesen Eintrag belegt.

In der Phase E wird auch der Speicherblock "d" wieder verfügbar. In diesem Falle ergibt die mit jedem wieder verfügbar werdenden Speicherblock eingeleitete Überprüfung, ob der unmittelbar vorher gefundene und/oder unmittelbar nachfolgende Speicherblock ebenfalls verfügbar ist, ein positives Ergebnis, so daß die benachbarten verfügbaren Speicherblöcke "d" und "1" zu einem einzigen Speicherblock "1" verschmolzen werden können, um eine unnötige Zerstückelung des Speicherraumes zu vermeiden.

Zu diesem Zweck wird ausgehend von der Adresse, z.B. AD:d=13, des jeweils ersten Wortes 1.W eines wieder verfügbar werdenden Speicherblockes, z.B. "d", anhand der um Eins verringerten Adresse, z.B. AD:d-1=12, geprüft, ob das vorangehende Speicherwort, das das letzte Wort LW des vorangehenden Speicherblockes "c" ist, mit einer Referenz auf die Referenztabelle R-TAB zeigt.

Analoges gilt für die Überprüfung des ersten Wortes 1.W des nachfolgenden Speicherblockes, z.B. "1", dessen Adresse sich aus der Anfangsadresse, z.B. AD:d=13, des wieder verfügbar gewordenen Speicherblockes, z.B. "d", zuzüglich der Größe, z.B. SIZE:d=3, dieses Blockes ergibt. Wird dabei eine Referenz auf die Referenztabelle R-TAB gefunden, dann wird der entsprechende Eintrag daraufhin überprüft, ob die dort eingetragene Speicheradresse mit dem Beginn des jeweiligen Speicherblockes identisch ist. Im vorliegenden Fall enthält das letzte Wort LW des Speicherblockes "c" keine Referenz, wohl aber der nachfolgende Speicherblock "1", dessen erstes Wort 1.W auf den Eintrag TAB:1 der Referenztabelle R-TAB verweist. Da die dort als Referenz eingetragene Adresse AD:15 identisch mit der Adresse für das erste Wort 1.W des referenzierenden Speicherblockes "1", ist der Nachweis erbracht, daß der nachfolgende Block "1" bereits verfügbar ist und mit dem wieder verfügbaren Speicherblock d verschmolzen werden kann. Zu diesem Zweck wird dann die Referenz TAB:1 vom ersten Wort 1.W des Speicherblockes "1" auf das 1.Wort des Speicherblockes "d" mit der AD:13 übertragen und der Eintrag TAB:1 in der Referenztabelle R-TAB entsprechend dieser Adresse geändert. Außerdem wird der Wert SIZE der neuen Größe des wieder erweiterten Speicherblockes "1" angepaßt.

In Phase F wird auch der Speicherblock "c" wieder verfügbar, wobei sowohl der vorangehende Speicherblock "2" als auch der nachfolgende Speicherblock "1" bereits verfügbar ist. Alle drei Speicherblöcke können daher zu einem einzigen verfügbaren Speicherblock verschmolzen werden. Dabei wird der Speicherblock "c" zunächst mit dem verfügbaren Block "2" verschmolzen, was zu der Anpassung des Eintrages TAB:2 an die neue Adresse AD:5 führt. Bei der anschließenden Verschmelzung mit Block "1" wird dann die Größe SIZE auf den neuen Wert 36 eingestellt. Da damit der ursprüngliche Speicherblock "1" in den Speicherblock "2" einbezogen ist, wird außerdem der Eintrag TAB:1 mit der ungültigen Referenz "nil" versehen und die Größe SIZE auf den Wert "0" gesetzt.

Auch hierbei ist unterstellt, daß für die Referenztabelle R-TAB entsprechend FIG 4 eine bestimmte Anzahl von Speicherabschnitten TAB=1 bis TAB4 vorgegeben ist, die mit einer gültigen Referenz oder mit einem davon abweichenden Datum "nil" belegt sein können. Jedoch können auch in diesem Fall die freien Speicherabschnitte gekettet verwendet werden, so daß für die Änderung der Referenztabelle R-TAB keine Suchvorgänge erforderlich sind.

## Patentansprüche

1. Verfahren zur Verwaltung von Objekten in Datenverarbeitungsanlagen an Hand von Tabellen,
**dadurch gekennzeichnet**,
daß die frei verfügbaren Objekte (OB:i) mit einer Referenz (TAB:j) auf ein Datum in einer Referenztabelle (R-TAB) versehen werden, das wiederum eine Referenz (OB:i) auf dasselbe Objekt (OB:i) beinhaltet, und daß auf ein frei verfügbares Objekt (z.B. OB:3) bezogene Steuervorgänge erst freigegeben werden, wenn eine Prüfung die Einhaltung der sich daraus ergebenden beiden Referenzbedingungen ergeben hat.

2. Verfahren nach Anspruch 1,
**dadurch gekennzeichnet**,
daß die Referenztabelle aus einer vorgegebenen Anzahl von Speicherabschnitten eines Speichers gebildet wird und daß jedes Datum in der Referenztabelle (R-TAB) ohne gültige Referenz auf eines der Objekte (OB:i) durch ein von allen gültigen Referenzen abweichendes vorgegebenes Datum (nil) gebildet wird.

3. Verfahren nach Anspruch 2,
**dadurch gekennzeichnet**,
daß die Anzahl der Eintragsfelder in der Referenztabelle (R-TAB) ausgehend von einer Mindestgröße bei einer größeren Anzahl der verfügbaren Objekte (OB:i) entsprechend vergrößerbar ist.

4. Verfahren nach Anspruch 1,
**dadurch gekennzeichnet**,
daß nicht mit Einträgen belegten Speicherabschnitte der Referenztabelle (R-TAB) für weitere, verfügbar werdende Objekte über Adressen gekettet sind, wobei ein Zeiger auf den ersten Speicherabschnitt dieser Kette verweist, so daß Änderungen der Referenztabelle ohne Suchvorgänge ausgeführt werden können.

5. Verfahren zur Verwaltung eines Speichers in einer Datenverarbeitungsanlage, das nach dem Verfahren der Ansprüche 1 bis 4 arbeitet,
**dadurch gekennzeichnet**,
daß frei verfügbare Speicherblöcke (BL:i) als Teileinheiten des Speichers (SP) die Objekte bilden.

6. Verfahren nach Anspruch 5,
**dadurch gekennzeichnet**,
daß in jedem freien Speicherblock (BL:i) das erste und letzte Wort (1.W bzw. LW) des Speicherblockes (z.B. BL:1) mit der Referenz (z.B. TAB:0) auf dasselbe Datum in der Referenztabelle (R-TAB) belegt und die Größe (SIZE:1) des jeweiligen Speicherblockes (BL:1) ebenfalls in diesem Speicherblock gespeichert wird.

7. Verfahren nach Anspruch 5,
**dadurch gekennzeichnet**,
daß in jedem freien Speicherblock (BL:i) das erste und letzte Wort (1.W bzw. LW) des Speicherblockes (z.B. BL:1) mit der Referenz (z.B. TAB:0) auf dasselbe Datum in der Referenztabelle (R-TAB) belegt wird und daß die Größe (SIZE:1) des jeweiligen Speicherblockes (BL:1) zusammen mit der Referenz (BL:1) das Datum in der Referenztabelle (R-TAB) bildet.

8. Verfahren nach einem der Ansprüche 5 bis 7,
**dadurch gekennzeichnet**,
daß die einzelnen Referenzen durch entsprechende Speicheradressen (AD:m,TAB:n) gebildet werden.

9. Verfahren nach einem der Ansprüche 4 bis 8,
**dadurch gekennzeichnet**,
daß mit jedem einer Anwendung zugeordneten Speicherblock (z.B. BL:a) die Referenzen entsprechend den sich daraus ergebenden Veränderungen abgeändert werden, daß bei jedem wieder frei verfügbar werdenden Speicherblock (z.B. BL:c) an Hand der Referenzen geprüft wird, ob der unmittelbar vorausgehende und/oder nachfolgende Speicherblock ebenfalls frei verfügbar ist, und
daß verfügbare aufeinanderfolgende Speicherblöcke zu einem verfügbaren Speicherblock mit entsprechend angepaßten Referenzen zusammengefaßt werden.
